# EUROPEAN PATENT SPECIFICATION

(11) **EP 3 292 008 B1**
(45) Date of publication and mention of the grant of the patent: **07.10.2020**
(21) Application number: 15774674.4
(22) Date of filing: 07.05.2015
(51) Int. Cl.: B60H 1/32, F25D 19/00, F25D 29/00

(54) **EVAPORATOR CONNECTION BOX**
VERDAMPFERANSCHLUSSKASTEN
BOÎTE DE CONNEXION D'ÉVAPORATEUR

(43) Date of publication of application: 14.03.2018
(73) Proprietor: Carrier Corporation, Farmington, CT 06034 (US)
(72) Inventor: VAAS, Philippe Thierry, F-76520 Franqueville Saint Pierre (FR)
(74) Representative: Dehns
(86) International application number: PCT/IB2015/000847
(87) International publication number: WO 2016/178049

(56) References cited:
- US-A- 4 292 661
- US-A1- 2004 134 227

## Description

### BACKGROUND OF THE INVENTION

The subject matter disclosed herein generally relates to electrical connections and, more particularly, to electrical connections of evaporators. Embodiments of the invention are directed to accessible electrical connector boxes for evaporators.

A typical refrigerated cargo truck or refrigerated tractor trailer, such as those utilized to transport a cargo via sea, rail, or road, is a truck or trailer having a cargo compartment modified to include a refrigeration unit located at one end of the truck or trailer. Refrigeration units typically include a compressor, a condenser, an expansion valve, and an evaporator serially connected by refrigerant lines in a closed refrigerant circuit in accord with known refrigerant vapor compression cycles. A power unit, such as an engine, drives the compressor of the refrigeration unit, and may be diesel powered, natural gas powered, or other type of engine. In many tractor trailer transport refrigeration systems, the compressor is driven by the engine shaft either through a belt drive or by a mechanical shaft-to-shaft link. In other systems, the engine drives a generator that generates electrical power, which in turn drives the compressor.

Manufacturers and operators of fleets of refrigerated trucks and refrigerated tractor trailer desire to maximize operational efficiency of not only the refrigeration unit, but of the truck or tractor trailer system as a whole. One area of improvement may be made with respect to the evaporators of the refrigeration systems. Evaporators are used during the refrigeration process to maintain appropriate temperatures within the refrigerated tractor trailer. The evaporators are electrically powered devices that require appropriate cabling and wiring for suitable operation. Document US 4 292 661 discloses a control box for an evaporator that is contained within a housing.

### BRIEF DESCRIPTION OF THE INVENTION

According to the invention, an electrical connection assembly for an evaporator according to claim 1 is provided. The assembly includes a frame fixedly connected to an exterior of an evaporator, and a tray having at least one aperture in a wall thereof and supporting a quick-connect electrical system, the tray configured within at least a portion of the frame. The tray is movable from a first position to a second position, the first position being a closed position wherein the quick-connect electrical system is secured within the frame, and the second position being an open position that is removed from the first position and configured to enable access to the quick-connect electrical system within the tray.

In addition to one or more of the features described above, or as an alternative, further embodiments may include at least one fastener configured to securely and fixedly attached the frame to the exterior of the evaporator.

In addition to one or more of the features described above, or as an alternative, further embodiments may include at least two electrical cables that are electrically connected in the quick-connect electrical system.

In addition to one or more of the features described above, or as an alternative, further embodiments may include that the at least one aperture is two apertures, and each of the at least two electrical cables enters the tray through a respective aperture.

In addition to one or more of the features described above, or as an alternative, further embodiments may include an opening mechanism on the tray.

In addition to one or more of the features described above, or as an alternative, further embodiments may include that the frame defines at least one track and the tray defines at least one corresponding guide, wherein the movement between the first position and the second position is along the at least one track.

In addition to one or more of the features described above, or as an alternative, further embodiments may include that the tray includes a securing mechanism configured to secure the tray in the first position, the securing mechanism operable to enable disengagement of the tray from the first position.

According to another embodiment, a method of accessing wiring of an evaporator is provided. The method includes moving a tray of a connection box from a first position to a second position, the tray being moveable within a frame that is fixedly secured to an exterior surface of an evaporator, wherein the first position is a closed position such that wiring within the tray is protected from the environment, and wherein the second position is an open position such that the wiring within the tray is accessible.

In addition to one or more of the features described above, or as an alternative, further embodiments may include that the moving of the tray from the first position to the second positon and from the second position to the first position comprises at least one of a translation motion, a rotation motion, and a sliding motion.

Technical effects of embodiments of the invention include an accessible electrical connection box for an evaporator. Further technical effects include a method of moving a connector box between first and second positions, wherein the first position is an operational, closed, sealed, or fixed position, and the second position is an open position that enables access to the electrical connections made within the electrical box.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1A is a schematic view of an exemplary embodiment of a system having a refrigeration unit and a cargo compartment;
FIG. 1B is a schematic view of an exemplary embodiment of a refrigeration unit for a cargo compartment of the tractor trailer system of FIG. 1A;
FIG. 2A is schematic view of an electrical system for an evaporator in accordance with an exemplary embodiment of the invention, shown in a first position;
FIG. 2B shows the electrical system of FIG. 2A in a second position;
FIG. 3A shows a schematic view of an electrical system for an evaporator in accordance with an alternative exemplary embodiment of the invention, shown in a first position;
FIG. 3B shows the electrical system of FIG. 3A in a second position;
FIG. 3C shows the electrical system of FIG. 3A in the second position, from an alternative perspective;
FIG. 4 is a process of accessing the electrical connectors of an evaporator in accordance with an exemplary embodiment of the invention.

### DETAILED DESCRIPTION OF THE INVENTION

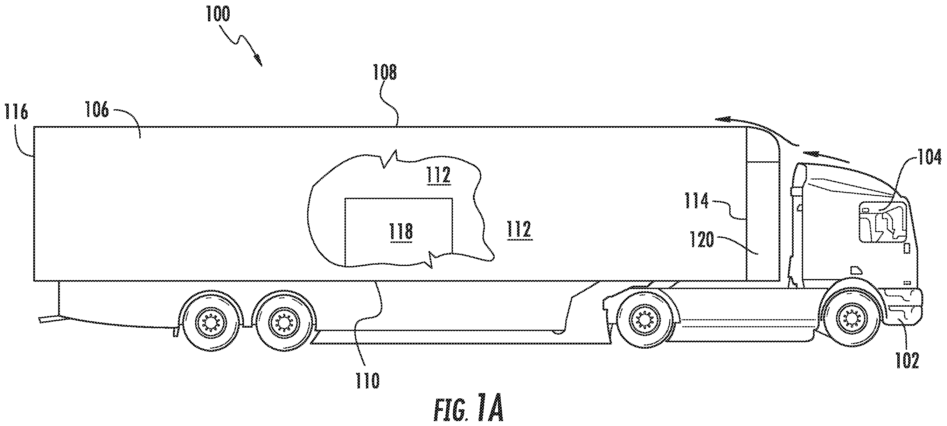

Shown in FIG. 1A is a schematic of an embodiment of a tractor trailer system 100. The tractor trailer system 100 includes a tractor 102 including an operator's compartment or cab 104 and also including an engine, which acts as the drive system of the tractor trailer system 100. A trailer 106 is coupled to the tractor 102. The trailer 106 is a refrigerated trailer 106 and includes a top wall 108, a directly opposed bottom wall 110, opposed side walls 112, and a front wall 114, with the front wall 114 being closest to the tractor 102. The trailer 106 further includes a door or doors (not shown) at a rear wall 116, opposite the front wall 114. The walls of the trailer 106 define a cargo compartment. The trailer 106 is configured to maintain a cargo 118 located inside the cargo compartment at a selected temperature through the use of a refrigeration unit 120 located on or next to the trailer 106. The refrigeration unit 120, as shown in FIG. 1A, is located at or attached to the front wall 114.

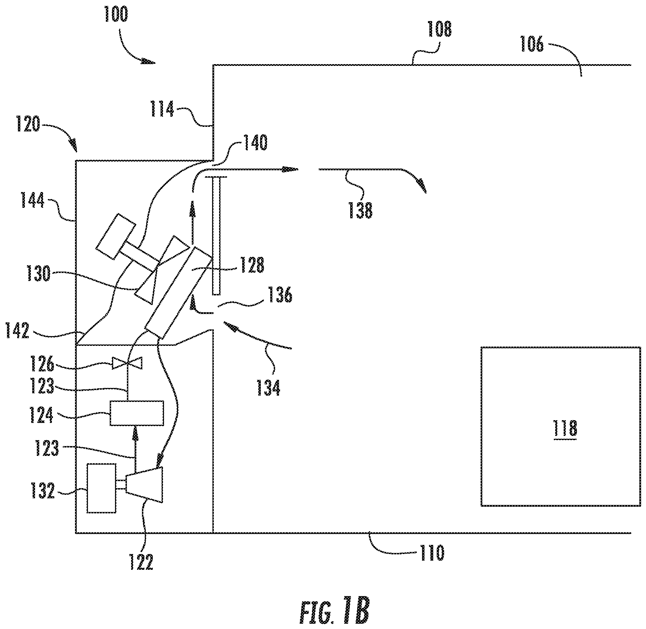

Referring now to FIG. 1B, the refrigeration unit 120 is shown in more detail. The refrigeration unit 120 includes a compressor 122, a condenser 124, an expansion valve 126, an evaporator 128, and an evaporator fan 130. The compressor 122 is operably connected to a refrigeration engine 132 which drives the compressor 122. The refrigeration engine 132 is connected to the compressor in one of several ways, such as a direct shaft drive, a belt drive, one or more clutches, and/or via an electrical generator. A refrigerant line 123 fluidly connects the components of the refrigeration unit 120.

Airflow is circulated into and through the cargo compartment of the trailer 106 by means of the refrigeration unit 120. A return airflow 134 flows into the refrigeration unit 120 from the cargo compartment of the trailer 106 through a refrigeration unit inlet 136, and across the evaporator 128 via the evaporator fan 130, thus cooling the return airflow 134 to a selected or predetermined temperature. The cooled return airflow 134, now referred to as supply airflow 138, is supplied into the cargo compartment of the trailer 106 through a refrigeration unit outlet 140, which in some embodiments is located near the top wall 108 of the trailer 106. The supply airflow 138 cools the cargo 118 in the cargo compartment of the trailer 106. It is to be appreciated that the refrigeration unit 120 can further be operated in reverse to warm the trailer 106 when, for example, the outside temperature is very low.

The refrigeration unit 120 is positioned in a frame 142 and contained in an accessible housing 144, with the frame 142 and/or the housing 144 secured to an exterior side of the front wall 114 such that the refrigeration unit 120 is positioned between the front wall 114 and the tractor 102, as shown in FIG. 1A.

It will be appreciated by those of skill in the art that the systems and configurations of FIGS. 1A and 1B are merely exemplary and provided for illustrative and descriptive purposes only. The invention is not limited thereby. For example, although a tractor trailer configuration is shown, systems may be employed in other trailer configurations, in various truck configurations, and/or in other systems and configurations.

The evaporator is housed within an evaporator housing and is electrically controlled. The electrical controls, i.e., the wiring, for the evaporator are external to the evaporator housing, as the interior of the housing contains the operational features of the evaporator, as known in the art. Traditionally, the wiring for the evaporator employs a connection box that is separate from the evaporator housing. Because the connection box is independent from the evaporator, system reliability may be impacted. In accordance with embodiments of the invention, connection boxes are provided that are part of the evaporator housing and are movably mounted thereon.

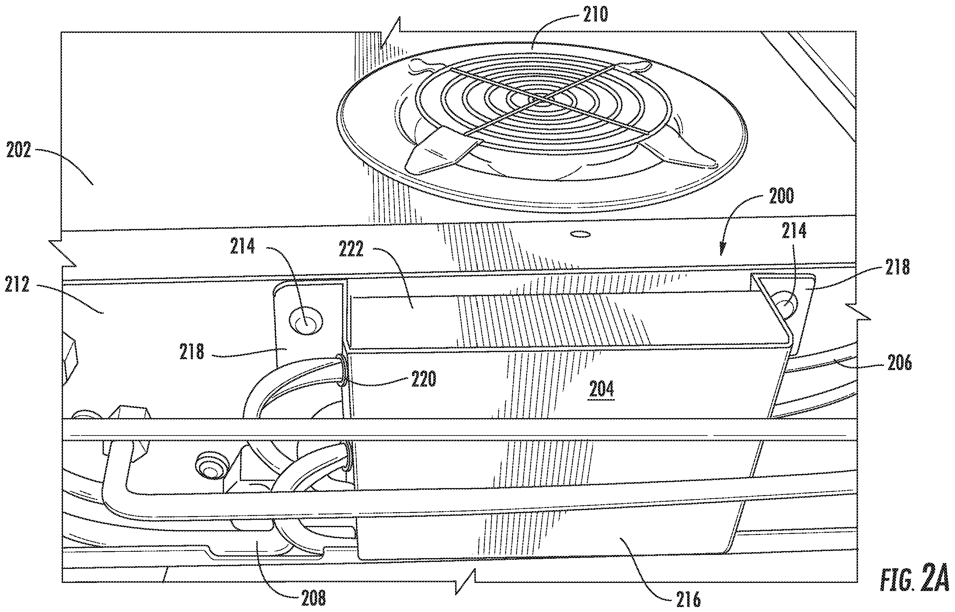

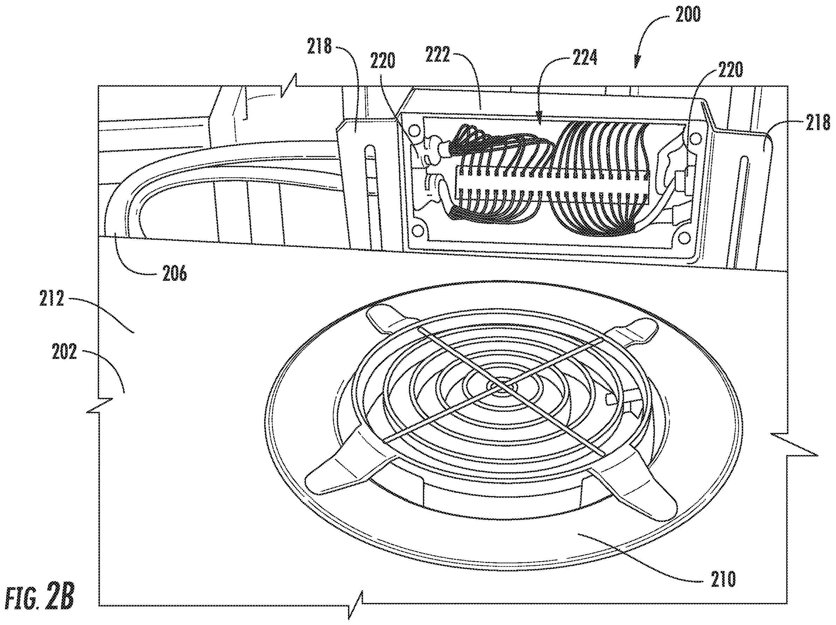

Turning now to FIGS. 2A and 2B, an electrical system 200 for an evaporator 202 in accordance with an exemplary embodiment of the invention is shown. FIG. 2A shows the electrical system 200 in a first position and FIG. 2B shows the electrical system 200 in a second position. The first position may be a closed, secured, and/or operational position of the electrical system 200. In some embodiments, in the first position, the electrical system 200 may be protected with respect to the atmosphere, to prevent damage to the electrical system 200. The second position may be an open and/or maintenance position of the electrical system 200.

Referring to FIGS. 2A and 2B, the electrical system 200 includes a connector box 204 and electrical cables 206, 208. The electrical system 200 is mounted on a side 202 of a housing 212 of an evaporator. The evaporator 202 includes a fan 210 and a housing 212, wherein the connector box 204, or a portion thereof, is movably attached to a surface of the housing 212.

The connector box 204 enables simple and safe connection of electrical system 200 associated with the evaporator 202. The connector box 204 is movably mounted on the housing 212 of the evaporator 202 by means of one or more fasteners 214, frame 216, and one or more guides 218. The wiring of the electrical system 200 enters the connector box 204 at one side and exits the connector box 204 at another side. The electrical cables 206, 208 may enter and exit the connector box 204 through sealed apertures 220 which may be sealed and/or contain grommets, etc. that are configured to support the electrical cables 206, 208. The moveable portion of the connector box 204 is a tray 222. The tray 222 may house or support the electrical connections 224 of the wire(s) of electrical cable 206 to electrical cable 208 (see FIG. 2B). For example, the electrical connections 224 housed on or within the tray 222 may be a quick connect configuration for the individual wired connections of the electrical cables 206, 208.

As noted above, FIG. 2A shows an electrical system 200 wherein the tray 222 of the connector box 204 is in a first, or closed, position. When in the first position, the tray 222 is securely fixed to or retained against the housing 212 of the evaporator 202. With reference to FIG. 2B, the tray 222 is moved to a second, or open, position. When in the second position, a user can access the electrical connections 224 to install, inspect, repair, etc. the wiring of the evaporator 202. Also shown in FIG. 2B, the guides 218 enable the tray 222 to slide upward, thus exposing the electrical connections 224.

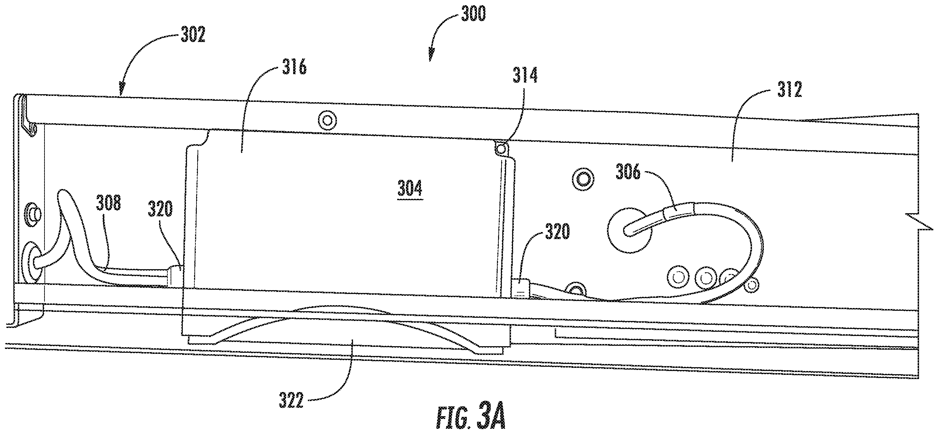

Turning now to FIGS. 3A-3C, an alternative embodiment of an electrical system for an evaporator in accordance with an exemplary embodiment of the invention is shown. Features of the embodiment of FIGS. 3A-3C may be similar to the features of the embodiment of FIGS. 2A-2B, and thus similar features are labeled with the same reference numbers except preceded by a "3" rather than a "2."

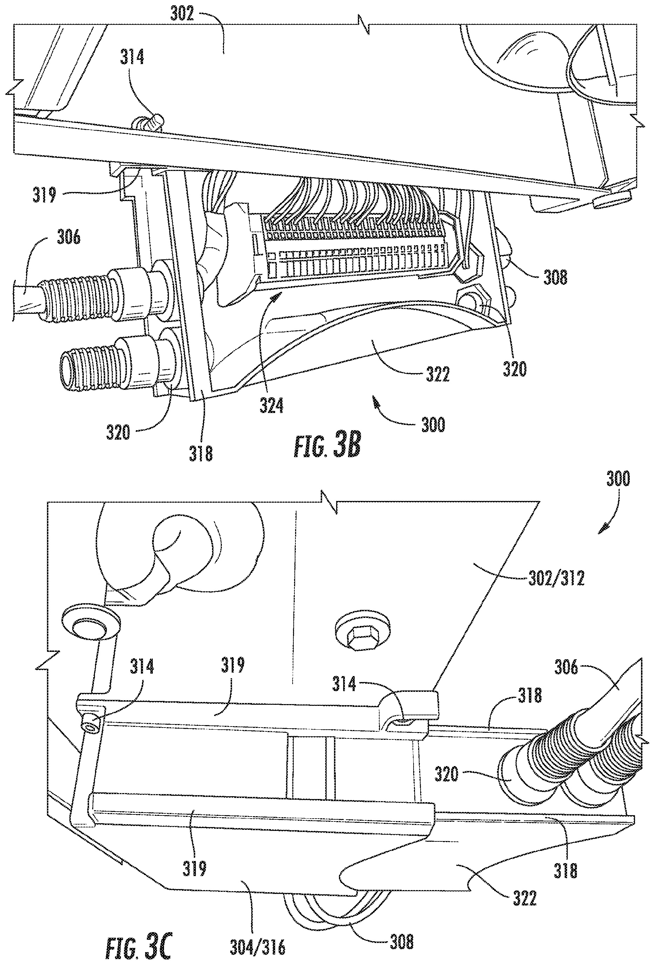

Electrical system 300 is movably mounted on an exterior side 312 of an evaporator 302. Electrical cables 306, 308 are configured to enter/exit the electrical system 300 through apertures 320 on sides of the housing 304 of the electrical system 300. A tray 322 is disposed within the housing 304 and movable relative thereto between a first position, shown in FIG. 3A, and a second position, shown in FIGS. 3B and 3C. The housing 304 is fixedly mounted to the side 312 of the evaporator 302 by means of one or more fasteners 314, and the tray 322 is configured to slideably move along a track 319 employing guides 318 (see FIGS. 3B and 3C).

As shown in FIG. 3B, the tray 322 may include an opening mechanism, such as a handle, grip, or other gripping mechanism, that enables a user to easily slide the tray 322 from the first position to the second position and back. As shown in FIG. 3C, the guides 318 may be configured as two guides that slide along the track 319, which may have corresponding positions to the guides 318.

As shown in the above embodiments, the apertures 220, 320 are configured to move with the tray such that the electrical cables move with the tray. Further, as clearly shown in FIGS. 2B and 3B, when in the second position, the electrical system enables easy access to the electrical connections housed within the tray. Moreover, in the first position, shown in FIGS. 2A and 3A, the electrical connections are sealed and protected with respect to an outside environment, such that water and other factors may not impact the performance of the electrical system.

In some embodiments, the tray may be locked or secured within the frame and/or to the housing of the evaporator. Thus, a lock or other securing mechanism may be configured as would be readily appreciated by those of skill in the art. For example, a latch, lock, sliding mechanism, snap, tab, etc. may be used for securing the tray and/or other moveable parts of the electrical connector in accordance with various embodiments of the invention.

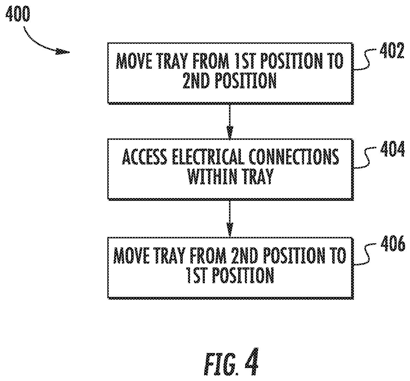

Turning now to FIG. 4, a process 400 for accessing the electrical connections of an evaporator is shown. The process 400 employs an electrical system as described above that includes a moveable tray that houses direct electrical connections between wiring of an evaporator. At step 402, the tray is moved from a first position to a second position. As described above, the first position is a closed position and the second position is an open position. In the first position, the wiring within the tray is inaccessible and is protected with respect to the environment, such as from water or other impacts. When moved to the second position, at step 402, the interior of the tray becomes accessible to a user. Step 402 may include unlocking or disengaging the tray from the first position, as would be appreciated by those of skill in the art.

Thus, at step 404, a user may access the electrical connections within the tray. For example, the user may install wiring of the evaporator. Alternatively, a user may perform an inspection or maintenance operation on the wiring that is housed within the tray.

After step 404 is completed, the user then moves the tray from the second position to the first position at step 406, thus securing and protecting the wiring of the evaporator. This may include reengaging a lock or other securing means, as described above.

Advantageously, embodiments of the invention provide an accessible electrical connection box for an evaporator. Advantageously, a connector box may be moved between first and second positions, wherein the first position is an operational, closed, sealed, or fixed position, and the second position is an open position that enables access to the electrical connections made with the electrical box. Furthermore, reliability of the electrical system for evaporators is improved. Due to the slideability of the tray that supports the electrical connections, troubleshooting of the electrical system is improved and simple connections are enabled by the quick connect system of wiring enabled by embodiments of the invention.

While the invention has been described in detail in connection with only a limited number of embodiments, it should be readily understood that the invention is not limited to such disclosed embodiments. Rather, the invention can be modified to incorporate any number of variations, alterations, substitutions, combination, sub-combination, or equivalent arrangements not heretofore described, but which are commensurate with the scope of the invention.

For example, although described herein with two types of guides and tracks, those of skill in the art will appreciate that other types of sliding systems may be used without departing from the scope of the invention.

Accordingly, the invention is not to be seen as limited by the foregoing description, but is only limited by the scope of the appended claims.

## Claims

1. An electrical connection assembly (204,304) for an evaporator, the assembly comprising an evaporator (202,302) having an exterior side (212,312) ; a frame (216,316) fixedly connected to the exterior side of the evaporator; and a tray (222,322) having at least one aperture in a wall thereof and supporting a quick-connect electrical system (224), the tray configured within at least a portion of the frame;
wherein the tray is slideable from a first position to a second position, the first position being a closed position wherein the quick-connect electrical system is secured within the frame and the quick-connect electrical system is protected from the environment, and the second position being an open position that is removed from the first position and configured to enable access to the quick-connect electrical system within the tray.

2. The assembly of claim 1, further comprising at least one fastener (214,314) configured to securely and fixedly attached the frame to the exterior of the evaporator.

3. The assembly of any of the preceding claims, further comprising at least two electrical cables (208) that are electrically connected in the quick-connect electrical system, wherein the electrical cables move with the tray from a first position to a second position.

4. The assembly of claim 3, wherein the at least one aperture (220) is two apertures, and each of the at least two electrical cables enters the tray through a respective aperture.

5. The assembly of any of the preceding claims, further comprising an opening mechanism on the tray.

6. The assembly of any of the preceding claims, wherein the frame defines at least one track (319) and the tray defines at least one corresponding guide (318), wherein the movement between the first position and the second position is along the at least one track.

7. The assembly of any of the preceding claims, wherein the tray includes a securing mechanism configured to secure the tray in the first position, the securing mechanism operable to enable disengagement of the tray from the first position.

8. A method of accessing wiring of an evaporator in an assembly according to claim 1, the method comprising:
sliding a tray (222, 322) of a connection box from a first position to a second position, the tray being slideable within a frame that is fixedly secured to an exterior surface (212, 312) of an evaporator (202,302)
wherein the first position is a closed position such that wiring within the tray is protected from the environment, and
wherein the second position is an open position such that the wiring within the tray is accessible.

## Patentansprüche

1. Elektrische Verbindungsanordnung (204,304) für einen Verdampfer, wobei die Anordnung einen Verdampfer (202,302) mit einer Außenseite (212,312) umfasst;
einen Rahmen (216,316), der fest mit der Außenseite des Verdampfers verbunden ist; und
eine Schale (222,322), die mindestens eine Öffnung in ihrer Wand aufweist und ein elektrisches Schnellverbindungssystem (224) trägt, wobei die Schale innerhalb mindestens eines Abschnitts des Rahmens gestaltet ist;
wobei die Schale von einer ersten Position zu einer zweiten Position gleitfähig ist, wobei die erste Position eine geschlossene Position ist, wobei das elektrische Schnellverbindungssystem in dem Rahmen gesichert ist und das elektrische Schnellverbindungssystem vor der Umgebung geschützt ist, und die zweite Position eine offene Position ist, die von der ersten Position entfernt und gestaltet ist, einen Zugriff auf das elektrische Schnellverbindungssystem in der Schale zu ermöglichen.

2. Anordnung nach Anspruch 1, weiter umfassend mindestens ein Befestigungselement (214,314), das gestaltet ist sicher und fest an dem Rahmen an der Außenseite des Verdampfers befestigt zu sein.

3. Anordnung nach einem der vorstehenden Ansprüche, weiter umfassend mindestens zwei elektrische Kabel (208), die elektrisch in dem elektrischen Schnellverbindungssystem verbunden sind, wobei sich die elektrischen Kabel mit der Schale von einer ersten Position zu einer zweiten Position bewegen.

4. Anordnung nach Anspruch 3, wobei die mindestens eine Öffnung (220) zwei Öffnungen sind und jedes der mindestens zwei elektrischen Kabel durch eine entsprechende Öffnung in die Schale eintritt.

5. Anordnung nach einem der vorstehenden Ansprüche, weiter umfassend einen Öffnungsmechanismus an der Schale.

6. Anordnung nach einem der vorstehenden Ansprüche, wobei der Rahmen mindestens eine Bahn (319) definiert und die Bahn mindestens eine entsprechende Führung (318) definiert, wobei die Bewegung zwischen der ersten Position und der zweiten Position entlang der mindestens einen Bahn erfolgt.

7. Anordnung nach einem der vorstehenden Ansprüche, wobei die Schale einen Sicherungsmechanismus beinhaltet, der gestaltet ist, die Schale in der ersten Position zu sichern, wobei der Sicherungsmechanismus betreibbar ist, um Lösung der Schale aus der ersten Position zu ermöglichen.

8. Verfahren zum Zugreifen auf Verdrahtung eines Verdampfers in einer Anordnung nach Anspruch 1, das Verfahren umfassend:
Schieben einer Schale (222, 322) eines Verbindungskastens von einer ersten Position zu einer zweiten Position, wobei die Schale in einem Rahmen gleitfähig ist, der fest an einer Außenfläche (212, 312) eines Verdampfers (202, 302) gesichert ist, wobei die erste Position eine geschlossene Position ist, sodass Verdrahtung innerhalb der Schale vor der Umgebung geschützt ist, und
wobei die zweite Position eine offene Position ist, sodass die Verdrahtung innerhalb der Schale zugänglich ist.

## Revendications

1. Ensemble de raccordement électrique (204, 304) pour un évaporateur, l'ensemble comprenant
un évaporateur (202, 302) présentant un côté extérieur (212, 312) ;
un cadre (216, 316) raccordé de manière fixe au côté extérieur de l'évaporateur ; et
un plateau (222, 322) présentant au moins une ouverture dans une paroi de celui-ci et supportant un système électrique à connexion rapide (224), le plateau étant configuré à l'intérieur d'au moins une partie du cadre ;
dans lequel le plateau peut coulisser d'une première position à une seconde position, la première position étant une position fermée dans laquelle le système électrique à connexion rapide est fixé à l'intérieur du cadre et le système électrique à connexion rapide est protégé de l'environnement, et la seconde position étant une position ouverte qui est enlevée de la première position et configurée pour permettre l'accès au système électrique à connexion rapide à l'intérieur du plateau.

2. Ensemble selon la revendication 1, comprenant en outre au moins une attache (214, 314) configurée pour attacher de manière sécurisée et fixe le cadre à l'extérieur de l'évaporateur.

3. Ensemble selon l'une quelconque des revendications précédentes, comprenant en outre au moins deux câbles électriques (208) qui sont électriquement raccordés dans le système électrique à connexion rapide, dans lequel les câbles électriques se déplacent avec le plateau d'une première position à une seconde position.

4. Ensemble selon la revendication 3, dans lequel l'au moins une ouverture (220) est deux ouvertures, et chacun des au moins deux câbles électriques entre dans le plateau par l'intermédiaire d'une ouverture respective.

5. Ensemble selon l'une quelconque des revendications précédentes, comprenant en outre un mécanisme d'ouverture sur le plateau.

6. Ensemble selon l'une quelconque des revendications précédentes, dans lequel le cadre définit au moins un circuit (319) et le plateau définit au moins un guide correspondant (318), dans lequel le mouvement entre la première position et la seconde position est le long de l'au moins un circuit.

7. Ensemble selon l'une quelconque des revendications précédentes, dans lequel le plateau inclut un mécanisme de fixation configuré pour fixer le plateau dans la première position, le mécanisme de fixation pouvant fonctionner pour permettre le désengagement du plateau de la première position.

8. Procédé pour accéder au câblage d'un évaporateur dans un ensemble selon la revendication 1, le procédé comprenant l'étape consistant à :
faire coulisser un plateau (222, 322) d'un boîtier de raccordement d'une première position à une seconde position, le plateau pouvant coulisser dans un cadre qui est fixé de manière fixe à une surface extérieure (212, 312) d'un évaporateur (202, 302),
dans lequel la première position est une position fermée de sorte qu'un câblage dans le plateau est protégé de l'environnement, et
dans lequel la seconde position est une position ouverte de sorte que le câblage dans le plateau est accessible.
